# EUROPEAN PATENT SPECIFICATION

(11) **EP 0 510 810 B1**
(45) Date of publication and mention of the grant of the patent: **02.08.1995**
(21) Application number: 92302480.6
(22) Date of filing: 23.03.1992
(51) Int. Cl.: C03B 9/195, C03B 9/295

(54) **Neck ring lever for glass forming machine**
Halsringhebel für eine Glasherstellungsmaschine
Levier pour anneau de bague d'un machine de fabrication d'objets en verre

(30) Priority: 23.04.1991 US 690078
(43) Date of publication of application: 28.10.1992
(73) Proprietor: Emhart Glass Machinery Investments Inc., Wilmington, Delaware 19801 (US)
(72) Inventor: Ciriello, Michael P., Prospect, Connecticut 06721 (US); Gorski, Richard A., W. Suffield, Connecticut 06093 (US)
(74) Representative: Randall, John Walter

(56) References cited:
- US-A- 4 339 264

## Description

The present invention relates to machines for making glassware and more particularly to a machine commonly used in the glass industry today and referred to as an H-28 machine.

An H-28 machine such as is disclosed in U.S. Patent 4,339,264 is a single table continuous rotary motion machine having a plurality of individual units mounted for rotation about the axis of the machine. Each unit produces glassware each complete revolution or cycle of the machine. Such machines are used to make seamless glassware. In this process, a moile is formed on top of a parison for gripping purposes. The moile is later cut away from the parison leaving the formed glassware. A neckring mechanism grips this moile for a selected portion of the 360° cycle and the operation of the neck ring mechanism is controlled by a neck ring lever and a fixed timing cam which must be very precisely located. The desired critical control is difficult to establish and maintain.

It is accordingly an object of the present invention to provide an improved neck ring lever assembly which will facilitate the setting and maintaining the control cycle for the gripping mechanism.

The present invention provides a neck ring lever assembly for use in a single table, continuous motion, glassware forming machine having a plurality of individual units mounted for rotation about the axis of the machine, each unit comprising a neck ring mechanism which is operated by a neck ring lever and which supports a moulded article in the operation of the machine, the neck ring lever assembly comprising the neck ring lever,
cam roller means at one end of said lever
means for supporting said lever for selected rotation about a horizontal axis including,
a shaft, and
a sleeve secured to said shaft,
said lever having a through bore for slidably receiving said sleeve, and
means for axially displacing said lever relative to said sleeve so that the location of said cam roller means can be advanced or retarded relative to the associated cam, comprising
an adjuster plate secured to said shaft and having a through bore therein, and
control means including,
a threaded shaft having a knob at one end and extending through the through bore in the adjuster plate,
a pair of nuts pinned to said threaded shaft on either side of said adjuster plate, and
a threaded through bore in said lever for receiving the free end of said threaded shaft.

There now follows a description, to be read with reference to the accompanying drawings, of a neck ring lever assembly embodying the invention

Referring the drawings:
Figure 1 is a top view of a neck ring mechanism of an H-28 machine; and

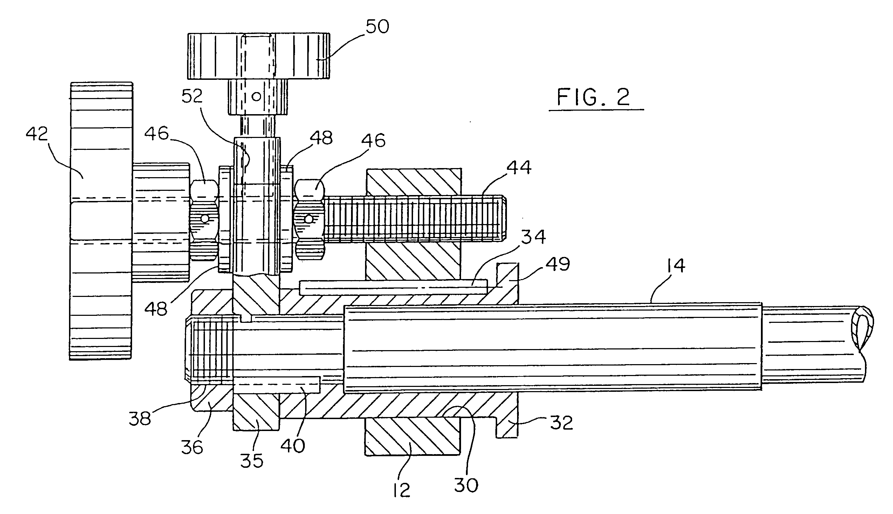

Figure 2 is a side cross sectional view of a portion of the neck ring lever of this mechanism.

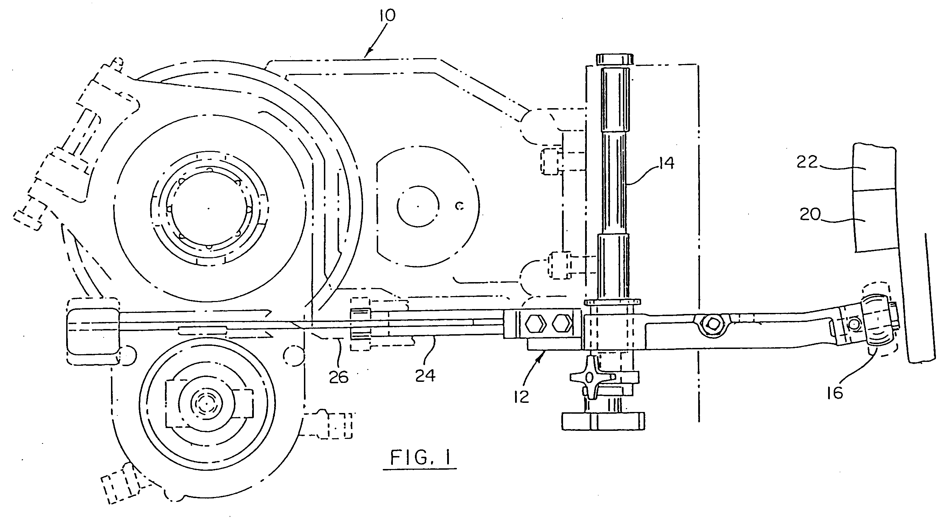

In an H-28 machine, which is a single table, continuous motion, glassware forming machine comprising a plurality of individual units mounted for rotation about the axis of the machine, each unit comprises a neck ring mechanism 10 which is shown in phantom in Figure 1. The mechanism 10 is opened and closed to grip and release a moile by a neck ring lever assembly which comprises a neck ring lever 12 which is pivotally mounted on a shaft 14. Cam roller means in the form of a cam roll 16 are rotatably mounted at the end of the neck ring lever remote from the neck ring mechanism (the neck ring mechanism is rotatively displaced around the axis of the H-28 machine) and when the cam roll 16 rides up a cam surface 20 to a higher elevation 22 the neck ring lever 12 will rotate to operate the neck ring mechanism (the end of leaf spring 24 is displaced to displace a neck ring mechanism control linkage 26). The time when this occurs is critical. Slidably located within a horizontal through bore 30 in the neck ring lever 12 is a sleeve 32 which receives the shaft 14. A suitable key 34 prevents rotation of the sleeve 32 relative to the neck ring lever 12. Slidably mounted on the free end of the shaft is an adjuster plate 35 which is secured in position by a suitable nut 36 which is received by the threaded end 38 of the shaft 14. Relative rotation between the shaft 14, sleeve 32 and adjuster plate 34 is prevented by a suitable key 40.

A control knob 42 controls the axial displacement of the neck ring lever 12 along the sleeve 32. The threaded shaft 44 of the control knob passes through a pair of nuts 46 which are affixed to the threaded shaft 44 and which loosely locate washer 48 against opposed sides of the adjuster plate (the threaded screw passes through an enlarged hole in the adjuster plate 35) to define the adjuster plate assembly. Rotation of the control knob 42 accordingly effects axial displacement of the lever along the shaft 14, by displacing the lever between the adjacent nut 46 of the adjuster plate assembly and the flange 49 of the sleeve, to advance or retard the cam roll 16 with respect to the cam surface 20 and hence the timing of the neck ring gripping mechanism. To maintain the desired timing a set screw 50 which passes through a threaded bore 52 in the top portion of the adjuster plate forcefully engages the threaded screw.

## Claims

1. A neck ring lever assembly for use in a single table, continuous motion, glassware forming machine having a plurality of individual units mounted for rotation about the axis of the machine, each unit comprising a neck ring mechanism which is operated by a neck ring lever (12) and which supports a moulded article in the operation of the machine, the neck ring lever assembly comprising the neck ring lever (12),
cam roller means (16) at one end of said lever,
means for supporting said lever for selected rotation about a horizontal axis including,
a shaft (14), and
a sleeve (32) secured to said shaft,
said lever having a through bore (30) for slidably receiving said sleeve, and
means for axially displacing said lever relative to said sleeve so that the location of said cam roller means can be advanced or retarded relative to the associated cam, comprising
an adjuster plate (35) secured to said shaft and having a through bore therein, and
control means including,
a threaded shaft (44) having a knob (42) at one end and extending through the through bore in the adjuster plate,
a pair of nuts (46) pinned to said threaded shaft on either side of said adjuster plate, and
a threaded through bore in said lever for receiving the free end of said threaded shaft.

2. A neck ring lever assembly according to claim 1, further comprising set screw means (50) extending through a threaded bore (52) in said adjuster plate (35) for preventing the rotation of said threaded screw (44) relative to said adjuster plate.

3. A neck ring lever assembly according to claim 2, wherein said sleeve means (32) includes a flange (49) for capturing said lever (12) between said flange and said adjuster plate (35).

## Patentansprüche

1. Halsringhebelanordnung für die Verwendung bei einer Maschine zum Herstellen von Glasgegenständen mit einem einzigen Tisch und kontinuierlicher Bewegung, wobei eine Vielzahl von individuellen Einheiten zwecks Rotation um die Achse der Maschine angeordnet ist, wobei jede Einheit eine Halsringmechanik aufweist, die von einem Halsringhebel (12) betätigbar ist und welche im Betrieb der Maschine einen geformten Gegenstand abstützt, wobei die Halsringhebelanordnung den Halsringhebel (12), eine Nockenrolleneinrichtung (16) an einem Ende des Hebels und eine Einrichtung zum Abstützen des Hebels zwecks gewählter Rotation um eine horizontale Achse umfaßt, die eine Welle (14) und eine Hülse (32) einschließt, welche an der Welle befestigt ist, wobei der Hebel eine durchgehende Bohrung (30) zum gleitbaren Aufnehmen der Hülse aufweist, wobei eine Einrichtung zum axialen Verschieben des Hebels mit Bezug auf die Hülse vorgesehen ist, so daß die Lage der Nockenrolleneinrichtung bezüglich des zugeordneten Nockens vorgeschoben oder nachgestellt werden kann, wobei eine Einstellerplatte (35) an der Welle befestigt ist und eine Durchgangsbohrung aufweist, und wobei eine Steuereinrichtung vorgesehen ist, welche eine Gewindewelle (44), welche einen Knopf (42) an einem Ende aufweist und sich durch die Durchgangsbohrung in der Einstellerplatte erstreckt, ein Paar Muttern (46), die auf jeder Seite der Einstellerplatte der Gewindewelle verstiftet sind, und eine Gewindebohrung in dem Hebel zur Aufnahme des freien Endes der Gewindewelle umfaßt.

2. Halsringhebelanordnung nach Anspruch 1, dadurch gekennzeichnet, daß eine Einstellschraubeneinrichtung (50) sich durch eine Gewindebohrung (52) in der Einstellerplatte (35) erstreckt, um eine Rotation der Gewindewelle (44) gegen die Einstellerplatte zu verhindern.

3. Halsringhebelanordnung nach Anspruch 2, dadurch gekennzeichnet, daß die Hülse (32) einen Flansch (49) einschließt, um den Hebel (12) zwischen dem Flansch und der Einstellerplatte (35) einzufassen.

## Revendications

1. Ensemble formant levier pour anneau de bague destiné à être utilisé dans une machine de mise en forme d'objets en verre, à table unique, à mouvement continu, comportant plusieurs unités individuelles montées pour être mises en rotation autour de l'axe de la machine, chaque unité comportant un mécanisme pour anneau de bague qui est actionné par un levier (12) pour anneau de bague et qui supporte un article moulé lors du fonctionnement de la machine, l'ensemble formant levier (12) pour anneau de bague comportant le levier pour anneau de bague,
des moyens (16) formant galet de came situé au niveau d'une première extrémité dudit levier
des moyens pour supporter ledit levier pour qu'il ait une mise en rotation sélectionnée autour d'un axe horizontal, comportant
un arbre (14), et
un manchon (32) fixé audit arbre,
ledit levier ayant un alésage traversant (30) destiné à recevoir de manière coulissante ledit manchon, et
des moyens pour déplacer axialement ledit levier par rapport audit manchon de sorte que l'emplacement desdits moyens formant galet de came peut être avancé ou retardé par rapport à la came associée, comportant
une plaque de réglage (35) fixée audit arbre et ayant un alésage traversant celle-ci, et
des moyens de commande comportant,
un arbre fileté (44) comportant un bouton (42) au niveau d'une première extrémité et s'étendant à travers l'alésage traversant de la plaque de réglage,
une paire d'écrous (46) goupillés sur ledit arbre fileté de chaque côté de ladite plaque de réglage, et
un alésage traversant fileté situé dans ledit levier pour recevoir l'extrémité libre dudit arbre fileté.

2. Ensemble formant levier pour anneau de bague selon la revendication 1, comportant en outre des moyens formant vis de réglage (50) s'étendant à travers un alésage fileté (52) de ladite plaque de réglage (35) pour empêcher la mise en rotation de ladite vis filetée (44) par rapport à ladite plaque de réglage.

3. Ensemble formant levier pour anneau de bague selon la revendication 2, dans lequel le manchon (32) comporte un rebord (49) destiné à rendre ledit levier (12) captif entre ledit rebord et ladite plaque de réglage (35).
